Europäisches Patentamt

European Patent Office

Office européen des brevets

(19)

(11) **EP 1 316 793 A1**

(12) ## EUROPEAN PATENT APPLICATION

(43) Date of publication:
**04.06.2003 Bulletin 2003/23**

(51) Int Cl.[7]: **G01N 21/47**, C12M 1/34

(21) Application number: **01128395.9**

(22) Date of filing: **03.12.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
• **Leist, Christian**
**5073 Gipf-Oberfrick (CH)**
• **Balzer, Andreas**
**79539 Lörrach (DE)**

(72) Inventors:
• **Leist, Christian**
**5073 Gipf-Oberfrick (CH)**
• **Balzer, Andreas**
**79539 Lörrach (DE)**

(74) Representative: **Felder, Peter et al**
**Schmauder & Partner AG**
**Zwängiweg 7**
**8038 Zürich (CH)**

(54) **Process and apparatus for characterization of a collection of cells**

(57)    An apparatus for characterization of a collection of cells comprises an imaging device (2) with a magnifying objective (4) featuring an optical axis (A) and a focal plane (P), the imaging device (2) further comprising an image processing device (6), a light source (8) and a transparent object plate (14) with a substantially even sample face (18) oriented substantially perpendicular to said optical axis (A), the light source (8) producing a substantially collimated light bundle (10) directed along said optical axis (A) and towards the objective (4), the object plate (14) being arranged between the light source (8) and the objective (4). A process for characterization of said collection of cells involves the steps of:

a) arranging said collection of cells (20) on the sample face (18) so as to form a substantially planar arrangement (22) of cells that are all adjacent to the sample face (18),

b) obtaining a group of images of said cell arrangement (22), the group comprising at least one set of images of a selected section of said cell arrangement; and

c) applying to each set of images an image processing procedure to obtain said characterization.

Fig. 1

## Description

Technical Field of the Invention

The present invention relates to a process for characterization of a collection of cells according to the preamble of claim 1 and to an apparatus according to the preamble of claim12.

Prior Art

In DE 40 32 002 A1 there is described a process of the above mentioned kind, the proces relating to characterization of a collection of cells in a culture medium, particularly a bioreactor, by means of an imaging device. The imaging device described therein comprises a microscope with a magnifying objective featuring an optical axis and a focal plane and further comprising a video camera serving and an image processing device. Moreover, the imaging device comprises a light source producing a substantially collimated light bundle directed along said optical axis as well as a transparent object plate with a substantially even sample face oriented substantially perpendicular to said optical axis and arranged between the light source and the objective. In this known process, an image is recorded after adjusting the microsope so that the focal plane is located at an essentially arbitrary position within a sampling volume of the culture medium. By applying known digital image processing techniques one counts the cells that are discernible in the image; comparison of the cell number with the results from calibration measurements then allows one to determine the concentration of cells in the culture medium. It is also taught in DE 40 32 002 A1 to use a light source emitting ultraviolet light in the wavelength range of 340 to 365 nm, which is known to induce fluorescence, particularly in viable cells which contain strongly fluorescent coenzymes.

A further process of the above mentioned kind relates to the characterization of a collection of yeast cells and has been disclosed by Bittner et al. (C. Bittner, G. Wehner, T. Scheper, "In Situ Microscopy for On-Line Determination of Biomass, Biotechnology and Bioengineering, Vol. 60, No. 1, October 05, 1998, pp. 24-35). These authors have recognized the advantage of exploiting the refractive properties of yeast cells. Since the refractive index of the cell cytosol is higher than that of the surrounding cultivation liquid and since yeast cells have ellipsoidal shape, each cell acts as a convex lens and thus leads to focussing of an impinging light beam. Because the focus of a cell is much smaller than the cell itself, a refractive image produced by a group of aggregated cells will generally contain a plurality of non-overlapping light spots, unlike the overlapping features of a conventional bright field image of the same cell group. Accordingly, the use of refractive images is particularly advantageous with regard to performing an automated analysis of the images of a collection of cells.

Like in DE 40 32 002 A1, the process disclosed by Bittner et al. involves image acquisition of a collection of cells having a substantially homogeneous spatial distribution. In order to avoid disturbances caused by stirring of the reactor contents, a sampling volume containing the cell collection to be characterized is isolated from the stirred volume. Image acquisition is then carried out after a short waiting period of 2 seconds that allows for settling down of the macroscopic movement of the sample but leaves substantially unchanged the spatial distribution of cells within the sampling voulume.

Summary of the Invention

It is an object of the present invention to provide an improved process and apparatus for characterization of cells. The foregoing and further objects are achieved by the process defined in claim 1 and by the apparatus defined in claim 12.

By arranging said collection of cells on the sample face so as to form a substantially planar arrangement of cells that are all adjacent to the sample face, it is possible to define along the optical axis positions that are in a specific geometrical relation to said planar arrangement. In particular, one can adjust the magnifying objective so that the focal plane is located not only at a specified axial distance from the sample face but also at a generally different but specified axial distance from the planar cell arrangement. This allows for acquisition of a set of optically well defined images comprising a refractive image as well as a bright field image and/or a centroid image. Such a set of images has an information content that is subsantially larger than the sum of information contents of the single images forming said set. Accordingly, the process and the apparatus of this invention allow one to exploit synergies between the single images forming said image set and thus to achieve a far more comprehensive, multiparametric characterization of a collection of cells than previously attainable.

Advantageous embodiments of the invention are disclosed in the dependent claims.

An advantageous method for arranging the collection of cells on said sample face so as to form a substantially planar arrangement is defined in claim 2.

According to claim 3, said pre-treatment further includes applying a labelling procedure to said collection of cells so as to obtain a collection of labelled cells, said labelling being chosen so as to enhance contrast in at least one image of said set of images. For example, according to claim 4 said labelling procedure includes adding a fluorescent dye. However, other possibilities for labelling could be exploited depending on the particular application and the type of cells under investigation.

A particularly advantageous process for characterization is defined in claim 5, according to which said image processing procedure includes comparing spatially coincident image elements of said set of images. In this way, the information obtainable from each particular type of image within said set is combined to a comprehensive set of information relating to said collection of cells. In particular, one can consider in each image of a given image set a certain group of pixels attributable to an individual cell and thus forming a set of spatially coincident image elements; comparison of these image elements yields important information of said cell, e.g. whether it is viable, apoptotic or necrotic.

According to claim 6, said image processing procedure further includes applying a discrimination algorithm to the refractive image so as to obtain a plurality of discriminated light spots resulting from focussing of said light bundle by a subset of refractively active cells of said selected section. Moreover, according to claim 7, said image processing procedure further includes determining for each discriminated light spot at least one property selected from the group consisting of size, shape and intensity. According to claim 8, said image processing procedure further includes applying a discrimination algorithm to the labelled image so as to obtain a plurality of discriminated labelled spots resulting from a subset of labelled cells of said selected section. For example, if labelling is achieved by adding a fluorescent dye that cannot penetrate into viable cells, the labelled image will only show the fluorescence signal of non-viable cells. According to claim 9, said image processing procedure further includes applying a morphologic analysis algorithm to the bright field image so as to obtain a plurality of morphological parameters of the cells of said selected section.

Two important embodiments of the process according to this invention are defined in claims 10 and 11, according to which one obtains a group of images comprising a plurality of image sets. In the embodiment according to claim 10, each image set is obtained for a different section of said cell arrangement. By recording a plurality of image sets at different locations it is possible to characterize a correspondingly larger portion of said planar arrangement than with only one image set. In the embodiment according to claim 11, all image sets are obtained for substantially the same section of said cell arrangement, each image set being obtained at a different time. This process allows one to study the temporal evolution and hence the dynamics of said selected section.

In the preferred apparatus according to claim 13, said optical axis is oriented in a substantially vertical direction and said arrangement means comprise a sample chamber provided with a sample inlet and a sample outlet. Moreover, the sample chamber comprises a bottom window and a top window, the bottom window comprising a transparent object plate with a substantially even upper face oriented in a substantially horizontal direction, said upper face forming said sample face. This embodiment is ideally suited for carrying out a sedimentation of said cell collection. According to claim 14, the apparatus further comprises a sample handling system connected to said sample inlet. Moreover, according to claim 15, the apparatus further comprises a device for labelling said collection of cells.

Brief Description of the Drawings

The above mentioned and other features and objects of this invention and the manner of achieving them will become more apparent and this invention itself will be better understood by reference to the following description of various embodiments of this invention taken in conjunction with the accompanying drawings, wherein:

Fig. 1 is a schematic representation of an apparatus for characterization of a collection of cells;

Fig. 2 is a schematic representation of the apparatus of Fig. 1 and the associated sample handling system;

Fig. 3 is a vertical section of the sample chamber;

Fig. 4 shows different image planes of a FullScan (left) with first pass in the refraction plane, second pass in the bright field image plane and third pass in the centroid fluorescence image plane and with a set of three images taken for one section of the cell arrangement;

Fig. 5 shows one image set of a time resolved SnapScan of one single section;

Fig. 6 is an overview of the software concept;

Fig. 7 is an overview of the refractive image or "out of focus" algorithm for cell counting;

Fig. 8 illustrates a morphological image analysis of one bright-field image plane of a FullScan;

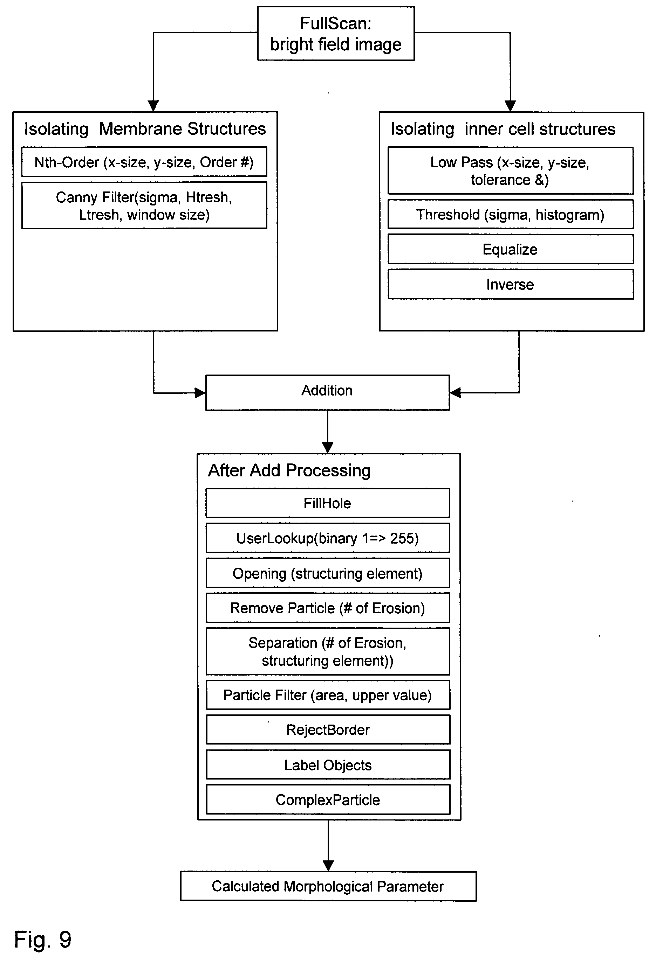

Fig. 9 is an overview of the bright field or "nearly in focus" algorithm for isolating morphological parameters describing objects isolated from bright-field images;

Fig. 10 is an intensity histogram of a bright field image, wherein all background levels are located around the mean value whereas the object values are located to the left and right of the background peak;

Fig. 11 shows the relation between various algorithms and subsequent calculations;

Fig. 12 shows one of 100 images of a FullScan, each one of the of three images on the right showing one of the three image planes taken for one selected section of the cell arrangement; the arrows in the refracive image mark cells which also fluoresce (see centroid fluorescence image at the bottom);

Fig. 13 schematically shows light refraction of an intact cell (left) and of a disordered cell (right);

Fig. 14 is a plot of the results from more than 200 automatic cell count measurements of more than 10 separate cell cultivations with different mammalian cells (CHO, Hybridoma) versus the results of manual cell counting;

Fig. 15 is part of a FullScan of a hybridoma cell cultivation with (a) the original bright field image and (b) the bright field image overlaid with the refraction image;

Fig. 16 shows analysis results of (a) bright field image overlaid with the analysis of the refractive image and (b) additionally overlaid with the fluorescence image;

Fig. 17 illustrates the influence of different size and shape on the Heywood-circularity factor;

Fig. 18 shows a Heywood-circularity diagram with clusters originating from debris and from cell fraction;

and wherein

Fig. 19 is a simplified model of light refraction by a cell clump of four cells generating four separated bright shining spots with circular dark margins.

The exemplifications set out herein are not to be construed as limiting the scope of this disclosure or the scope of this invention in any manner.

Detailed Description of the Invention

*Apparatus*

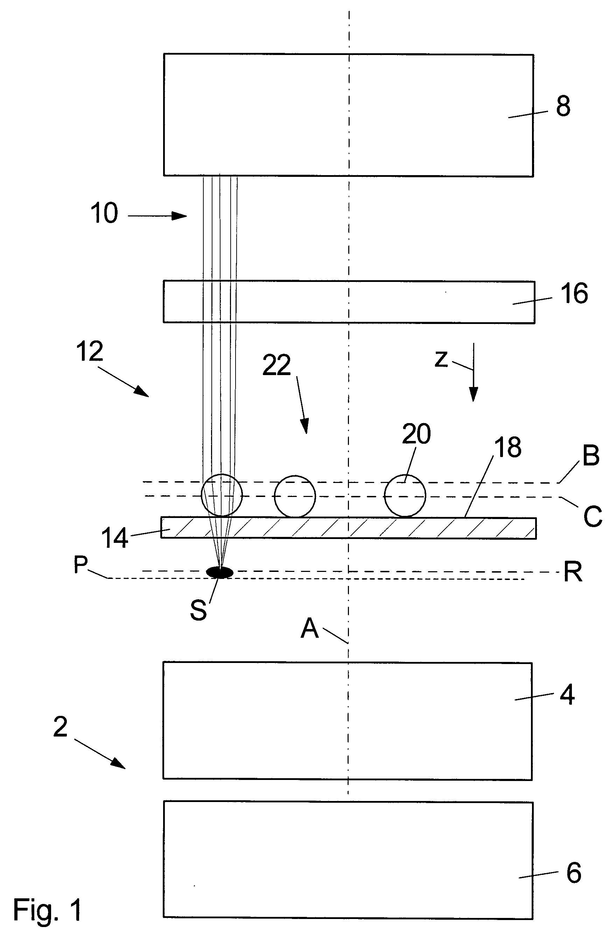

The apparatus schematically shown in Fig. 1 comprises an imaging device 2 which includes a modified inverse optical microsocope with a magnifying objective 4 that defines an optical axis A and a focal plane P. In this example, the optical axis A is oriented in a substantially vertical direction z whereas the focal plane P of the microscope is oriented in a substantially horizontal direction. The imaging device 2 further comprises an image processing device 6 as well as a light source 8 arranged above the objective 4 and producing a collimated light bundle 10 directed substantially parallel to the optical axis A in downward direction z. Accordingly, the light bundle 10 is directed towards the objective 4. It should be emphasized that the light source 6 is generally designed to produce visible light (henceforth denoted "vis") and/or ultraviolet light (henceforth denoted "uv").

A sample chamber 12 disposed between the light source 8 and the objective 4 comprises a bottom window 14 and a top window 16 defining a sample volume therebetween. In the example shown, each windows consists of a thin planar glass slide. In particular, the bottom window 14 has an upper face that forms a substantially even sample face 18 for arranging thereon a collection of cells 20 to be characterized so as to form a planar arrangement 22, the sample face 18 being oriented substantially perpendicular to the optical axis A.

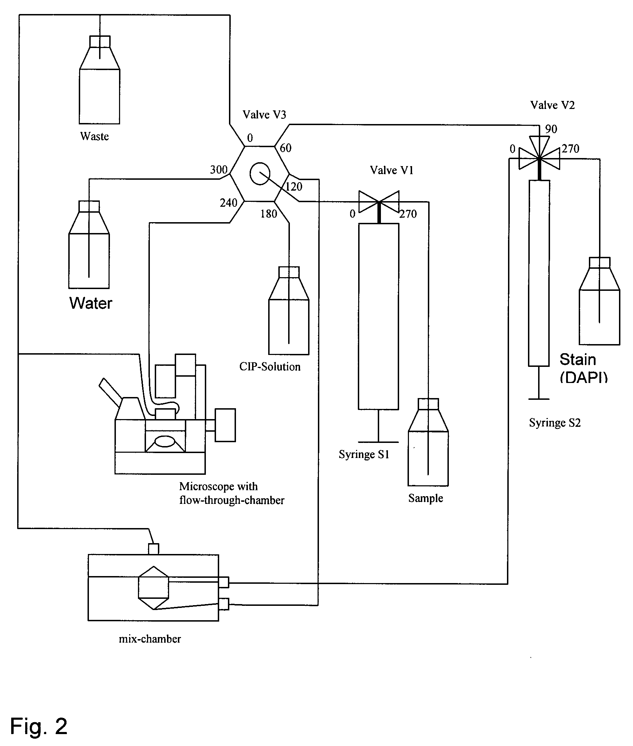

As shown in Fig. 2, the apparatus comprises a sample handling system which is connected to a sample inlet and a sample outlet of the sample cell. As will be discussed further hereinbelow, the sample handling system and sample cell are designed as means for arranging said collection of cells 20 on the sample face 18 so as to form a substantially planar arrangement of cells that are all adjacent to the sample face 18. Advantageously, the sample handling system further comprises a device for labelling said collection of cells by means of appropriate labelling techniques, particularly by staining with a fluorescent dye.

All the measurements described further hereinbelow were performed with a modified inverse microscope type Axiovert S 100 (Zeiss, Oberkochem, Germany) with an ACHROPLAN 20x objective (0,4/PH2). The microscope was equipped with a Zeiss condenser type 0.55, a green-filter, and an HBO-50 arc lamp as uv-light source for fluorescence observation. As fluorescent filter, the Zeiss standard filter set type 02 was used with a beamsplitter at 395 nm. The microscope was extended with a x,y-stage (Merzhäuser, Wetzlar, Germany), a motorized z-axis drive and a uv-light shutter-system for opening and closing the uv-light-path automatically. All these components were connected to a microprocessor driven control-unit (MCU-26, Zeiss) that allows for manual control of the stage and the z-axis as well as for remote control by a computer-system via an RS-232 serial-interface. Additionally, the vis-light source power supply was modified so as to allow for computer controlled switching on and off of the vis-light source.

The sample handling system shown in Fig. 2 features two automatic syringes and three multichannel valves (all components from Hamilton AG, Bonaduz, Switzerland) allowing for control of liquid handling as well as for labelling of the samples by staining. This system will be referred to as the "staining system" from now on. All components of the staining system can be computer controlled via a serial RS-232 connection.

Syringe S1 (volume 2,5 mL) is responsible for all liquid transport processes like filling the mixing chamber, loading the sample chamber with the cells to be characterized and cleaning the entire system. Valve V3 controls the distribution of all liquid flows to the devices connected thereto. Syringe S2 (1 mL) serves as a reservoir for the fluorescent stain employed. Via Valve V1, a sample can be loaded directly into syringe S1 and valve V2 connects the syringe S2 to the external dye reservoir or to fresh dye solution. Valve V2 also allows fading in a defined volume of dye solution in the liquid sample-stream which is transported into the mixing chamber. This set-up allows the system to introduce a very small amount of dye solution into a larger sample stream. In addition it guarantees good intermixing because the dye is faded in the liquid stream first and is then rinsed with the following sample.

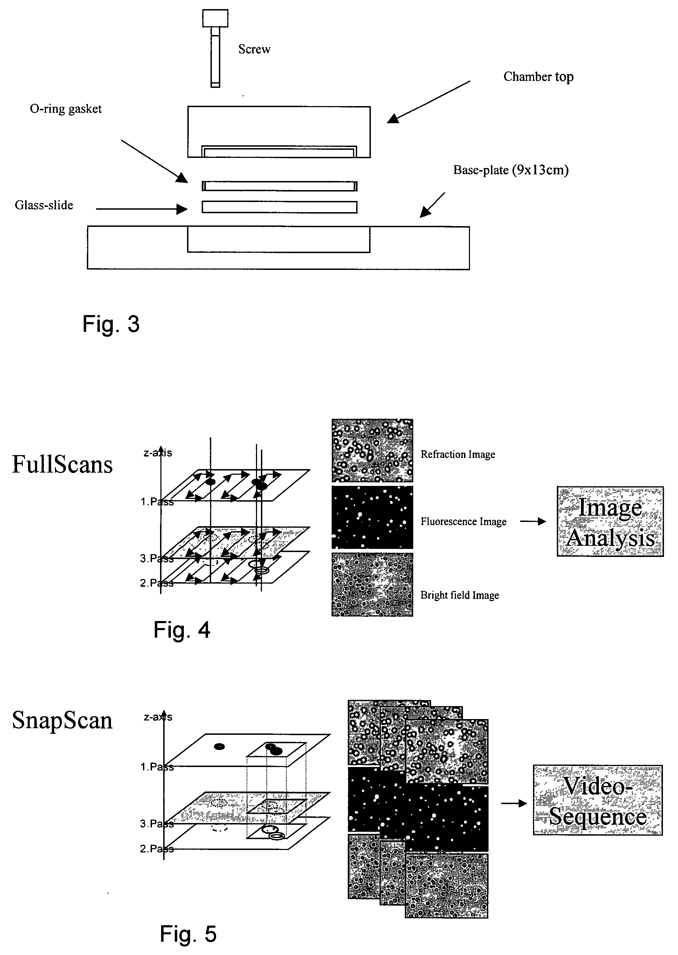

The sample chamber shown in more detail in Fig. 3 is based on a standard glass-slide as chamber bottom and is designed for discontinuous operation mode. This means, the chamber is loaded with a sample followed by a sedimentation phase. During this sedimentation phase the cells settle on the chamber bottom so as to form substantially planar arrangement of cells that are all adjacent to the sample face. The sample chamber consists of a PMMA block and is mounted with six screws on a metal base-plate. As plate format the dimensions of a standard microtiter plate (9x13 cm) were used to ensure that the base-plate fits correctly into the stage rack. PMMA was chosen because of its good optical properties and its better resistance against mechanical stress than glass. In- and outlet of the chamber were arranged at an angle of 45° to reduce shear stress in the bends of the chamber connectors. Teflon tubing was used for connecting the various components of the sample handling system. In order to have a well-defined volume of the sample chamber, a rhombic area was milled out of the chamber top with a depth of 200 $\mu$m. A standard microscope glass slide (76x26x1 mm, Menzel-Gläser, Germany) sealed with an o-ring gasket was screwed onto the base-plate to generate a constant measurement volume. The set-up using a standard glass slide has the advantage that the optical path of the microscope remains almost unchanged.

The mixing chamber is mainly designed for simply mixing the sample with the dye to be used. The chamber consists of a cylindrical mixing volume of ca. 2 ml with two in/outlets on the left side and a waste outlet on the top. The chamber top is held together with the chamber bottom by six screws. Top and bottom are sealed with a flat gasket. A small magnetic stirrer is added to improve the mixing. The design of the chamber allows the insertion of a flat filter membrane between top and bottom to perform simple washing procedures of the cell suspension.

The imaging device 2 further comprises an image processing device, namely a liquid cooled 256 gray-scale video camera (Camera: CF8/1 FMCC; Cooler and Power Supply MCC; Kappa, Gleichen, Germany) with an effective resolution of 752x576 pixel. The video signal of the camera was digitized by a frame-grabber (IMAQ PCI-1408, National Instruments, Austin, USA).

Computer control adjustment means serve for adjusting the microscope objective (4) so that the focal plane (P) is positioned at a specific position along the z-axis, essentially at a well defined axial position in relation to the planar cell arrangement (22). This allows one to obtain various images of the cell arrangement by adjusting the focal plane (P) to substantially coincide either with a refractive image plane (R) or a bright field image plane (B) or a centroid image plane (C). The significance of these various image planes will be disclosed further hereinbelow. The images thus obtained are then processed by means of a computer-based image processing procedure so as to achieve a multiparameter characterization of the cell collection.

*Materials and reagents*

For calibration of the imaging system, fluorescent polystyrene microspheres, FluoSpheres F-8837 from Molecular Probes (Oregon, USA) with a diameter of 15$\mu$m were used.

For all staining procedures the fluorescent dye 4',6-diamidino-2-phenylindole (DAPI) was used. The excitation maximum for DAPI bound to dsDNA is 358 nm, and the emission maximum is 461 nm. DAPI can be excited with a xenon or mercury-arc lamp or with the UV lines of an argon-ion UV laser. Binding of DAPI to dsDNA produces an approximately 20-fold fluorescence enhancement due to the displacement of water molecules from both DAPI and the minor groove.

As stock solution, 1 mg DAPI was dissolved in 1 ml pure water. The stock solution was spilt into 20 µl aliquots, which can be stored at 4°C for several months. As working solution, 20 µl was diluted with 980 µl PBS buffer. One milliliter of the working solution was directly loaded into syringe S2 of the staining system that served as a reservoir. Each diluted aliquot was sufficient for ten measurements

*Image acquisition in different image planes*

As shown schematically in Fig. 1, by exploiting two and preferably three different image planes, all of which are substantially parallel to the sample face 18, it is possible to obtain significantly more information about the cell arrangement 22 as would be possible by observation of only one image plane.

The so-called centroid image plane C is displaced from the sample face 18 towards the objective 4 by substantially one half of the average diameter of the collection cells to be characterized. Accordingly, the centroid plane coincides - on average - with the centers of the cells in the cell arrangement being observed. As generally known, use of the centroid plane is ideally suited for fluorescence observation. Obviously, the detection of fluorescent events generally requires the addition of a fluorescent dye to the cell collection, e.g. by means of the liquid handling and staining system described further hereinabove. Centroid images obtained with fluorescent dye labelling, henceforth also called "fluorescence images", have the advantage of a high contrast which allows rather straightforward recognition of fluorescent cells.

The so-called bright field image plane B, also called "nearly in focus plane", corresponds to the plane conventionally chosen in microscopy by a human observer. As generally known, the bright field image plane B provides the strongest contrast of the features contained in the bright field image. Because these features are the result of light diffraction by the cells, particularly the cell membranes, the bright field image plane is in general axially displaced from the centroid image plane C by an axial distance that amounts to a fraction of one half cell diameter.

The so-called refractive image plane R, also called "out-of-focus plane", is axially displaced from the centroid image plane C by substantially more than one half cell diameter. Operationally, the refractive image plane R is defined as a plane that contains a plurality of light spots S resulting from focussing of the light bundle by the cells of the selected section.

*Image scanning procedure: "FullScan" and "SnapScan"*

Depending on the particular application, image acquisition is carried out with one of two different modes.

The first mode will be referred to as "FullScan" mode because the microscope scans substantially the entire sample face by recording images of 100 selected sections of the cell arrangement and using up to three different focal plane locations. Thus, a FullScan consists of a group of up to 300 images, the image group comprising 100 image sets, each set consisting of 2 but preferably 3 images, namely a refractive image plus a bright field image and/or a centroid image. While adjustment of the axial z-position of the focal plane is carried out by computer controlling the microscope objective, translation in the x-y-plane required for moving from one selected section to the next one is achieved by computer controlled movement of the sample chamber and thus of the sample face. A FullScan starts with loading of 1 ml cell suspension into the liquid handling syringe S1 (see Fig. 2). The cell suspension and the fluorescence dye (in this case DAPI) are mixed in the mixing chamber for 1min and then the stained cells are loaded into the sample chamber. After a sedimentation time of 3 min nearly all cells have settled on the bottom of the glass chamber and are lying in the same focal plane, ready for being scanned. The following FullScan takes approximately 4 min. All images are stored on hard-disk for subsequent image processing and analysis. In parallel, a cleaning program is executed. Both programs together take approximately 10 min. In total, a FullScan takes around 18 min including image processing.

The second mode will be referred to as "SnapScan" mode since it is based on taking a set of images for one selected section in a temporal sequence. Accordingly, there is no need to translate the sample chamber for taking a SnapScan. Like with the FullScan, each set of images consists of 2 but preferably 3 images, namely a refractive image plus a bright field image and/or a centroid image. SnapScans can be used to generate video sequences that reveal any morphological changes of the cells during the observation time. Advantageously, uv light is admitted to the sample only when a fluorescence image is taken, thus preventing bleaching of the luorescent dye if the latter is not uv-light resistant. This provision makes it feasible to observe dye uptake over a long period of time without any bleaching effects. After a SnapScan has been taken, the image series can be overlapped in the subsequent image processing to create multilayer video sequences. Such video sequences give a better insight into the behavior of cells over a long period of time at a single position of the flow-chamber. Furthermore, the fluorescence signal can be quantified and gives an insight into the dynamics of the process of for example the dye uptake by the cells.

*Image processing software*

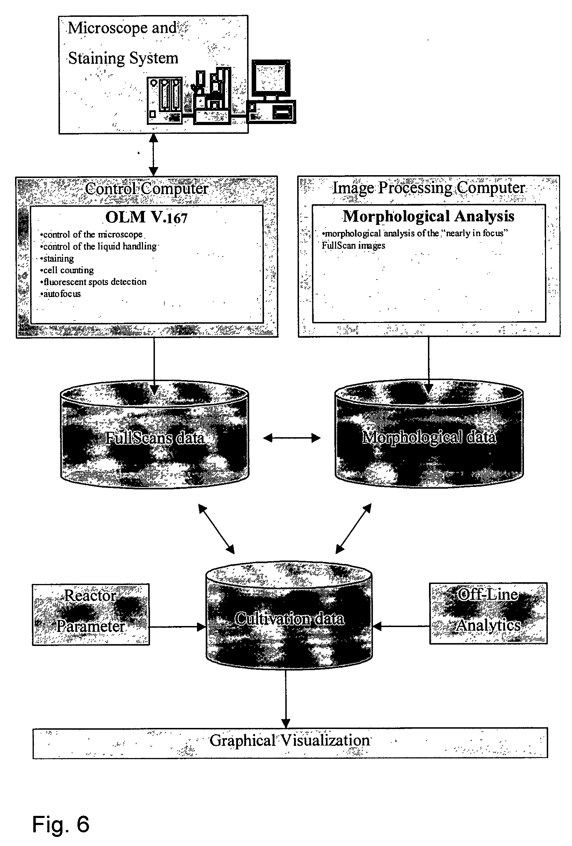

The complete software concept is shown in Fig. 6. The software is based on the programming language Labview and relies of the IMAQ-Vision library, both from National Instruments Corporation. An independent program was written for controlling the microscope and the liquid sample handling In addition, the program carries out part of the image processing. After a FullScan has been taken the program calculates the number of viable cells and counts the fluorescent events by analyzing two image planes, the refraction image plane and the fluorescence image plane of the FullScan.

The image processing was divided into two steps, namely a basic image processing step in which the refraction and the fluorescence images were analyzed to generate the viable cell counts and the viability and a more advanced image processing step which was executed by a second computer. During the advanced image processing the bright field image plane of a FullScan is analyzed and the developed algorithms extract morphological data, which are stored in a database. To handle the large amount of different data a database concept was developed based on three Microsoft Access databases also shown in Fig. 6. After a FullScan has been taken and the basic image processing which follows has been executed, a database called FullScans administers all the data generated by the automated microscope system and the program software. These data comprise the concentration of viable cells, the viability, the destination directory of the saved images of the FullScan and further information about the sample that can be manually added by the operator. The second database contains all the morphological data extracted from the bright field images analyzed by the second computer. The data in both databases are automatically linked together by the system. The third database contains all the additional information of the observed processes such as manually counted cell densities, product titer concentrations and additional off-line analysis results.

*Refractive image processing algorithm*

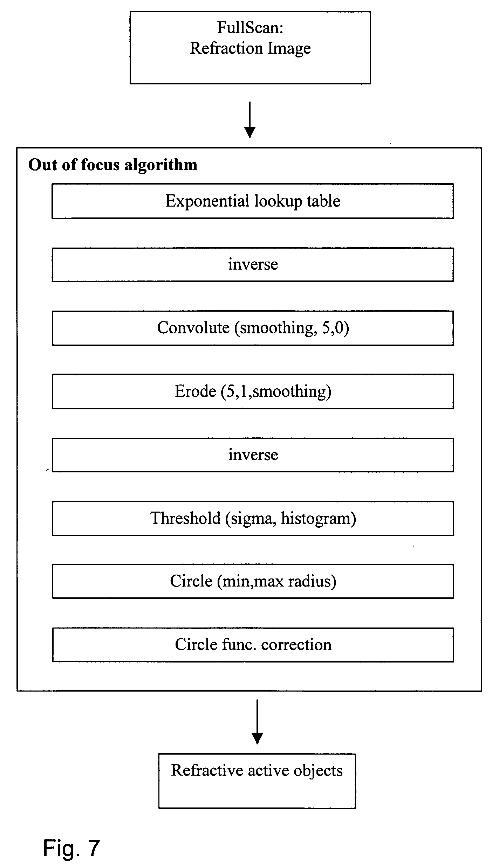

The algorithm for analysis of the refractive or "out-of-focus" images is schematically shown as a block diagram in Fig. 7. The image processing starts with brightening up of the incoming gray-level image by using a lookup table transformation. The exponential correction used expands high gray-level ranges while compressing low gray-level ranges. This means that the transformation decreases the overall brightness of an image and increases the contrast in bright areas at the expense of the contrast in dark areas. Subsequently, the image is inverted so that the bright gray-levels get darker and vice versa. Thereafter, a smoothing convolution filter is used to attenuate the variations of light intensity in the neighborhood of a pixel. This smoothes the overall shape of objects, blurs edges and removes details. After smoothing, the image is eroded, and subsequently the image is inverted and a threshold is calculated for generating a binary image in which background and objects are separated by different values. Once all objects have been separated by the threshold function, the image is analyzed using the known IMAQ circles function. This function separates overlapping circular particles. The circle function uses the Danielsson coefficient to reconstitute the form of a particle, provided that the particles are essentially circular. The particles are treated as a set of overlapping discs that are subsequently separated into separate discs. Therefore, it is possible to trace circles corresponding to each particle. Unfortunately, the original IMAQ circle algorithm is error-prone, because some particles are detected as more than one circle. For this reason, the algorithm was extended with a correction function to eliminate circles counted more than once. The correction is based on the assumption that two separate objects must have a distance of at least one half their diameter before they can be counted as two separate objects. Accordingly, the correction algorithm filters out all circles whose center lies inside the radius of another circle.

*Bright field image processing algorithm*

As generally known, bright field images of mammalian cells are low in contrast when the cells are unstained. Thus, a new algorithm for bright field or "nearly in focus" image processing was developed combining two different approaches that are normally used separately.

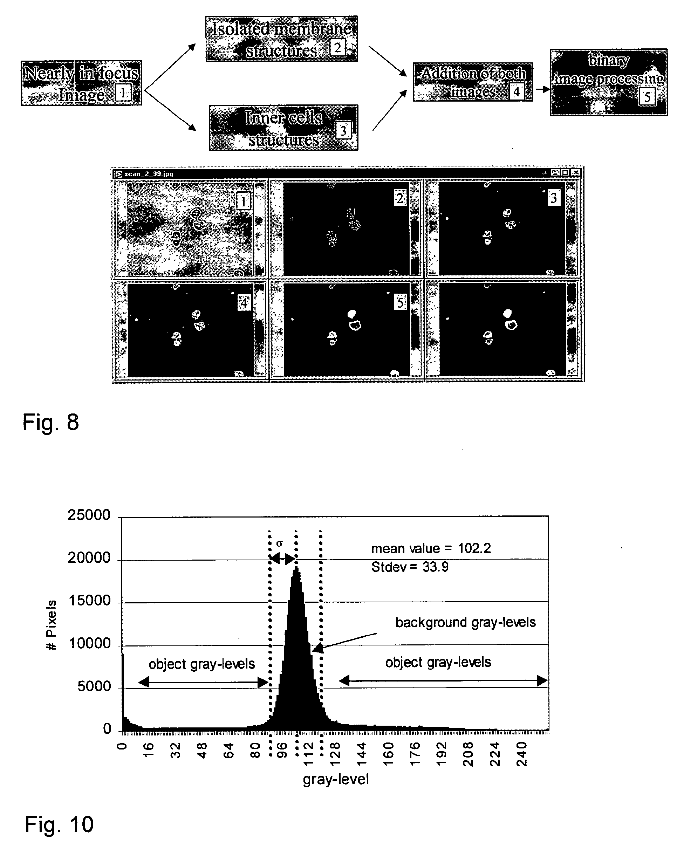

A first part of the algorithm isolates the membrane structures of the cells on the basis of their high contrast differences. A second part of the algorithm discerns the inner cell structures from the background on the basis of their different gray values in comparison to the average of all background pixels. In the subsequent step the isolated structures are added and processed further through a series of binary filters. Fig. 8 shows the major steps of the algorithm and the images below the diagram illustrate the effects of some of the major image processing steps. The image series starts with the original image (1) that shows four cells in the center and two cells touching the border of the image. Image (2) shows the isolated membrane structures and image (3) depicts the isolated inner cell structures. Both images are merged and the result of the merging can be seen in image (4). In image (5), all holes in the objects have been filled, labeled and separated but any objects touching the border have not been removed yet.

The "isolation of membrane structures" part of the "nearly in focus" algorithm starts with the IMAQ Nth-Order function, which also acts as a smoothing filter. The "Nth Orders" function orders, or classifies, the pixel values surrounding the pixel being processed. The data is placed into an array and the pixel being processed is set to the n-th pixel value, the n-th pixel being the ordered number. A 3x3 matrix was found to be the best array size in combination with the fourth order. After the filtration is finished a specialized edge detection method (IMAQ canny edge detection) is performed to isolate all cell membrane structures from the background. After isolation of the membrane structures, the IMAQ CannyEdgeDetection transformed image is ready for the addition as shown in Fig. 8.

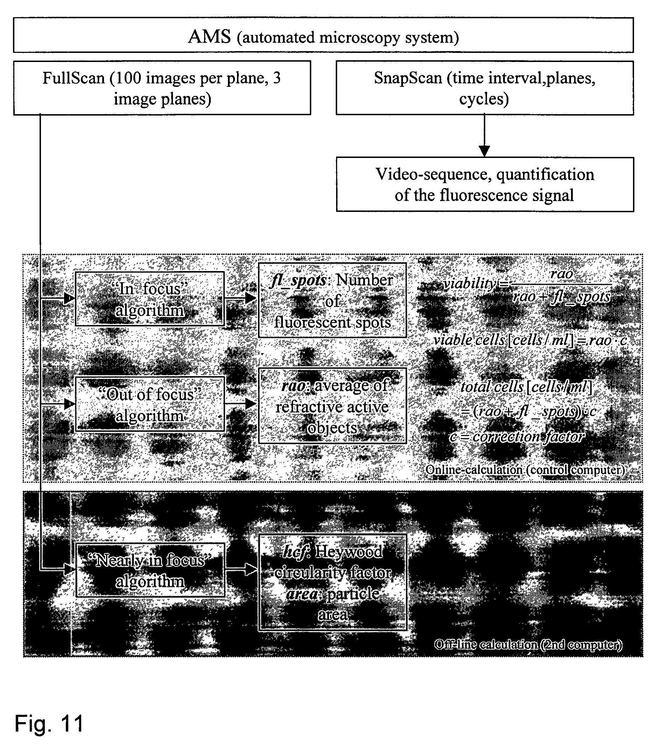

In the second part of the "nearly in focus" algorithm running in parallel with the first part, image processing starts with a low pass filter to blur the image structures. The low pass filter calculates the inter-pixel variation between the pixel being processed and the pixels surrounding it. If the pixel being processed has a variation greater than a specified percentage, it is set to the average pixel value as calculated from the neighboring pixels. After filtering, a specifically developed threshold-algorithm determines the threshold for building a binary image on the basis of an analysis of the histogram of the given image. On the assumption that the image contains more gray-levels belonging to the background of the image, the main peak in the histogram represents the background peak. The algorithm calculates the mean value and the standard deviation. A sigma is defined which represents a factor multiplied with the standard deviation of the mean value. The calculated value defines the width in which the main peak is cut out of the histogram. By calculating the mean value and the factor sigma all gray-levels belonging to the background can be cut out so that only the object information of the image remains, as shown in Fig. 10. The threshold function results in a binary image with the values 0 and 1. A subsequent equalizing function in combination with an image inversion converts all pixels with the value 1 into the value 255.

After both images have been added, several advanced IMAQ vision functions are used for further processing of the binary image. First, the IMAQ Fillhole function is used for hole filling. The function results in a binary image with a value range between 0 and 1. For all further processing it is necessary to convert the image into a binary form of 0 and 255, which is realized using a lookup-table. After correction, the binary image is treated with an opening function. The opening function is an erosion followed by a dilation. This function removes small particles and smoothes boundaries. A 3x3 matrix with the value 1 was used as structuring element in all experiments. The following "IMAQ removeParticle" function either eliminates or keeps particles resistant to a specified number of 3x3 erosions. The particles that are kept are exactly the same as those found in the original source image. Subsequently the IMAQ separation function is used to separate particles touching each other, particularly small isthmuses found between particles. It performs n erosions (n = Number of Erosion) and then reconstructs the final image based on the results of the erosion. If an existing isthmus is broken or removed during the erosion process, the particles are reconstructed without the isthmus. The reconstructed particles, however, have the same size as the initial particles except that they are separated. If no isthmus is broken during the erosion process, the particles are reconstructed as they were initially found and no change is made. A particle filter is then used to eliminate small objects from the image. The filter removes particles in an image according to their morphology. In the following step all particles are removed that touch the border of the image. These particles might have been truncated during the digitization of the image, and their elimination will, therefore, be useful to avoid erroneous particle measurements and statistics. Finally, all particles are labelled and analyzed on the basis of their morphology by the IMAQ "complexParticle" function.

The "nearly in focus" algorithm describes all the particles detected in the images by means of a plurality of morphological parameters. The IMAQ function "complex Measure" calculates the coefficients of all detected particles and returns a set of measurements made from particles in a binary image. A selection of these parameters is stored in the morphology database.

Table 1:

| Morphological parameters stored in the morphology database | |
|---|---|
| **Name** | **Description** |
| **Area (pixels)** | Surface area of particle in pixels |
| **Perimeter** | Length of outer contour of particle in user units |
| **Mean intercept perpendicular** | Mean length of the chords in an object perpendicular to its max intercept |
| **Ratio of equivalent ellipse axis** | Fraction of major axis to minor axis |
| **Ratio of equivalent rectangle sides** | Ratio of rectangle big side to rectangle small side |
| **Elongation factor** | Max intercept/mean perpendicular intercept |
| **Compactness factor** | Particle area/(breadth $\times$ width) |
| **Heywood circularity factor** | Particle perimeter/perimeter of circle having same area as particle |

EP 1 316 793 A1

Table 1: (continued)

| Morphological parameters stored in the morphology database | |
|---|---|
| **Name** | **Description** |
| **Type Factor** | A complex factor relating the surface area to the moment of inertia |
| **Hydraulic Radius** | Particle area / particle perimeter |
| **Waddel disk diameter** | Diameter of the disk having the same area as the particle in user units |

*Centroid image processing algorithm*

The analysis of centroid images is carried out by applying a threshold criterion. An automatic threshold function of the Labview IMAQ vision package was used. The best automatic threshold function was empirically determined by using numerous test images and the Vision Builder Program from National Instruments. It turned out that the metric method works best for solving the problem of segmentating an image into a particle region and a background region. After thresholding, the binary images can be easily counted out with the IMAQ circles function. Ideally, every counted object corresponds to a stained cell nucleus. So far, centroid images of fluorescent cells have been predominately analyzed by this method. It appears possible to also evaluate the intensity of fluorescent spots, e.g. the average and the standard deviation of the spot intensity. The standard deviation is a measure for the irregularity of the gray levels within the spot and can be used for characterizing the DNA distribution to distinguish between apoptotic and necrotic nuclei. First attempts have been made to extend the algorithm so as to cope with the morphology of fluorescent spots.

*Further calculations*

For the calculation of absolute cell concentrations, a correction factor c was introduced on the basis of the sample chamber geometry and comparison with manually counted samples (see Fig. 11 for an overview). To obtain absolute concentrations, all data must be multiplied with this correction factor, which is given by (see Table 2 for values):

$$c = n\,f\,s$$

Table 2:

| Parameters for the calculation of the correction factor c | | |
|---|---|---|
| Quantity | Value | Explanation |
| n: umber of images per plane | 100 | FullScan: 100 images per image plane |
| f: chamber geometry factor | $\frac{1}{1.2}$ | Empirically determined |
| s: scale factor | 1000 | conversion from µl to ml |

*Autofocus routine*

Reliable automatic focussing is required to obtain accurate measurements of cell images with a system capable of scanning multiple microscope fields. This may be due to many causes, including mechanical instability of the microscope (gear slippage, settling between moving components in the stage), adjustment errors and irregularity of glass slide surfaces. In the apparatus described here, the sample was firmly fixed onto the microscope stage, but it was extraordinarily difficult to position the sample face so as to be exactly orthogonal to the optical axis. In addition, the bottom window turned out to be slightly bent due to tension caused by the screws holding the bottom window against the chamber top. Experience has shown that it is necessary to use an auto-focus system in order to achieve a constant position in z-direction across the entire scanned microscope field. The autofocus routine scans the sample face at 100 positions in 50 image planes in z-direction around a previously determined default value. At each one of these 5000 scanned positions, the focus function is calculated and the extremum of the function is saved in a matrix that is stored in a "preferences" file on disk. This matrix represents the 3D profile of the scanned flow-chamber. Thus, the preferences file serves as the basis for all the FullScans or SnapScans that are subsequently executed and for which a correct determination of the right focal plane is of crucial importance. After extensive testing of numerous types of focus functions known from the prior art, the following function expressing the image contrast by intensity variance

9

or standard deviation was adopted (Price J. H., Gough D. A., "Comparsion of Phase-Contrast and Fluorescence Digital Autofocus for Scanning Microscopy"; Cytometry 16 (1994) 283-297):

$$F_{focus} = \sigma^2 = \frac{1}{n(n-1)} \left( n \sum_{ij} g_{ij}^2 - \left( \sum_{ij} g_{ij} \right)^2 \right)$$

with $n=i \cdot j$; total number of pixels in the image g. The autofocus procedure can easily be executed during start-up of the system or whenever a new calibration of the system is necessary, e.g. after cleaning of the sample chamber or shut-down of the entire system.

It was found that calibration measurements with fluorescent styrol beads or microspheres with a diameter similar to that of hybridoma or CHO cells ($\sim$ 15 µm) are advantageous for carrying out the autofocus procedure. The use of such microspheres guarantees a more accurate calibration than with mammalian cells because microspheres are very homogenous in size and shape and their optical properties are very similar.

Examples

*Refractive activity and fluorescent events*

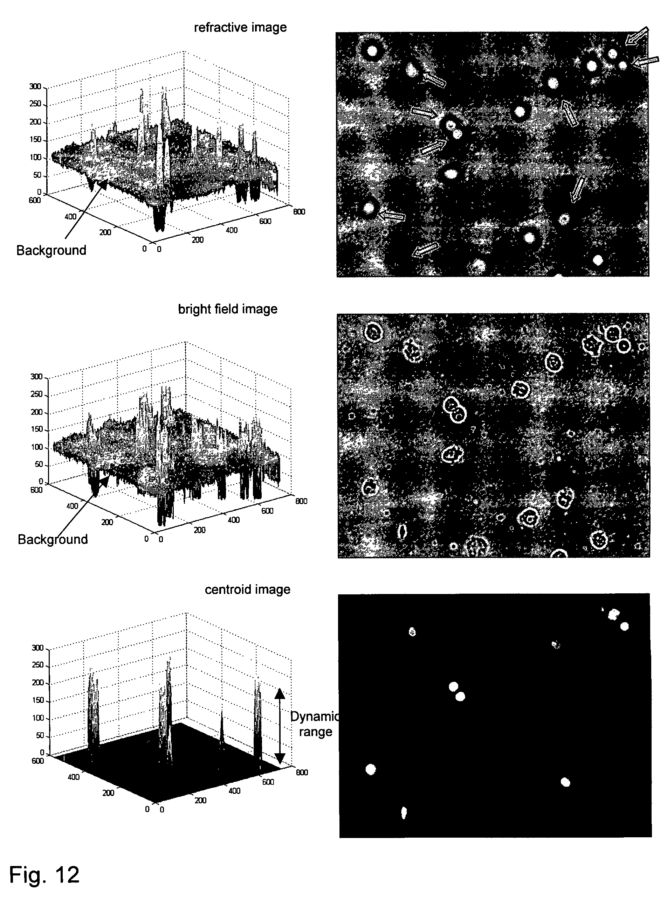

A small part of an entire FullScan, an image set of three images is shown in Fig. 12. The images were taken from the first of 100 positions of a FullScan and show CHO-cells at the beginning of the production phase of a monoclonal antibody production. In addition to the images, three 3D surface plots are shown that represent the same image information as the original images, but enable a quantification of the gray-levels and give a better insight into the distribution of pixels.

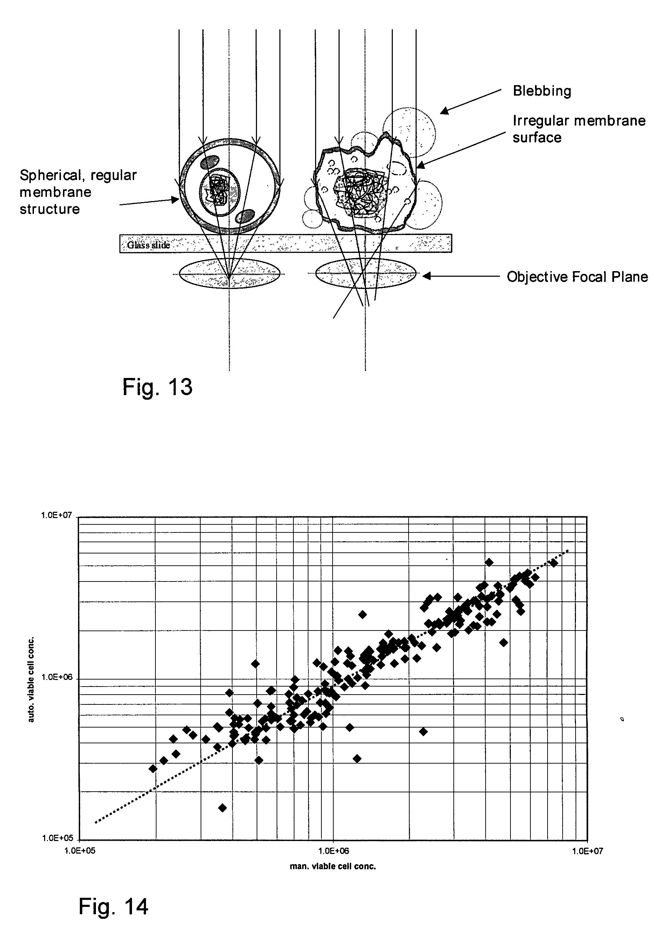

Each image plane shown in Fig. 12 contains specific information for the characterization the physiological state of the cells, although some information in the image set is redundant. For example, most of the objects of the bright field image can also be found as refractively active objects in the refractive image. However, the capability of light refraction of the objects depends on their geometrical shape and their optical consistence. Fig. 13 serves as a very simple model to explain the optical differences of an "intact" cell from a suspension and a physiologically and morphologically disordered cell. A normal spherical cell refracts light as a thick lens would do. Entering light is refracted to a focal point, or more precisely, to a focal plane (catacaustic), henceforth referred to - like hereinabove - as refractive plane. If the focal plane of the microscope objective is brought to coincide with on the refractive plane of the cells, all cells appear as bright shining spots. The brightness, size and shape of the spots are dependent on the three-dimensional structure, the state of the intracellular components and the membrane structure of the cells. Disordered cells that have a damaged membrane, have entered into the apoptotic pathway or have become necrotic, are not able to focus the entered light in the same way as spherical cells and thus generate a weaker signal (see Fig. 13, cell on the right hand side).

Some redundancy exists between the out-of-focus image and the fluorescence image because the weakest shining objects, in terms of refractive activity, can also be detected as fluorescent spots in the fluorescence image. A reciprocal relation seems to exist between the refractive activity of a detected cell and the membrane permeability that is crucial for interaction of dye and DNA. The more diffuse the spots in the refractive image plane appear, with darker gray-levels in the spot center, the more likely it is that the membrane of these objects has become permeable for the DNA dye DAPI. The arrows in the top right image of Fig. 12 point out all cells that show a weak refractive activity and also fluoresce.

The 3D plots in Fig. 12 show the entire dynamic range of each image plane. It can be seen that the refractive image as well as the bright field image has a strong plateau at around 100 on the 0 to 255 gray-level scale. These plateaus mainly consist of pixels belonging to the background. In contrast to this, the most significant pixels, containing the object information, lie in regions over and beneath the plateau (peaks in the plots). Hence it follows that any applied algorithm should be able to separate the object information from the background plateau. In contrary to both image planes in which the background planes lie in the middle of the gray-level range, the background plane of the centroid image plane is zero because only stained objects are able to fluoresce. This fact simplifies image analysis extraordinarily because every pixel with a value greater than zero represents object information. Therefore, the entire dynamic range of the fluorescence images contains object information.

*Determination of cell number and viability*

To test the suitability of the process and apparatus described hereinabove for determination of changes of cell number and viability during mammalian cell culture, various CHO and hybridoma cells during biopharmaceutical production of antibodies and other complex glycoproteins were observed. In all cultivations studied, the cell concentrations were determined according to the prior art by using a hemocytometer and the trypan-blue exclusion method. Moreover, glucose and lactate concentrations as well as the product titer were determined. In addition, for each manually counted sample a FullScan was taken and analyzed as described hereinabove. For determination of cell numbers only two of the three image planes of a FullScan were analyzed, namely the refractive and the centroid image planes.

The measurements show that with the process and apparatus described hereinabove it is possible to carry out an automatic characterization of the course of a cell cultivation process. In comparison with the manual count method according to the prior art, the automatic determination has several advantages: it is more precise, more reliable and yields additional information, e.g. by means of morphological analysis of the samples. The automatic method allows for differentiation between different growth phases of fed-batch cultivations after downshift of the temperature, which is often missed by manual observations. In addition the detection of viability is more sensitive, which can be explained by the higher contrast of the fluorescence images. Fig. 14 shows the results of more than 200 FullScans in comparison with manually counted viable cells. The data are based on 16 different experiments with two different CHO cell lines and one hybridoma cell line. The results of both methods are very similar over the whole range of concentrations studied here and the relation between automatic and manual cell counts is generally linear (see dotted line). Clearly, however, automatic counting is not prone to the operator errors that can occur with manual determination of total and viable cell concentration. Moreover, the determination of refractively active objects as viable cells describes the course of cell cultivation better than a hemocytometer determination could do.

*Morphological analysis*

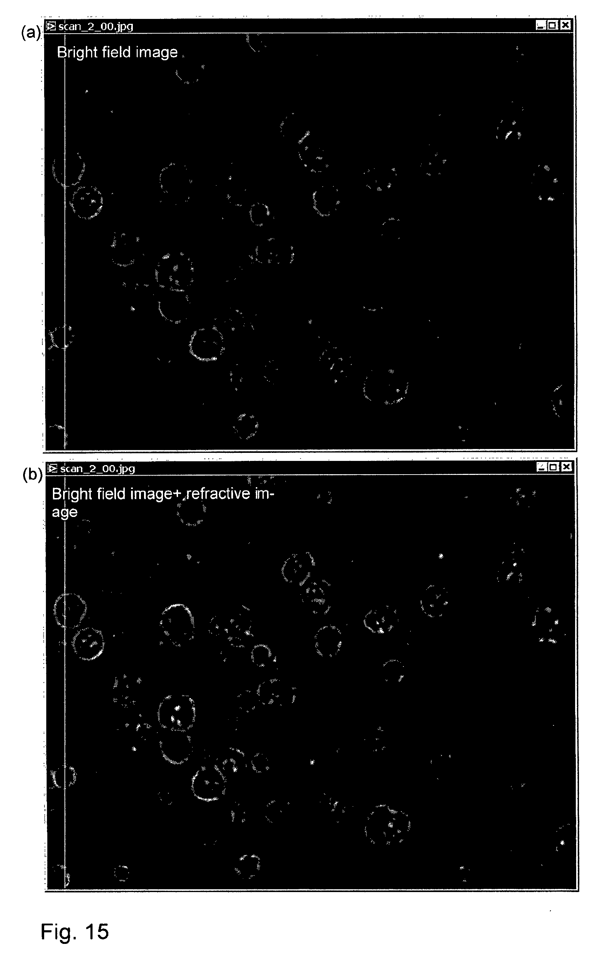

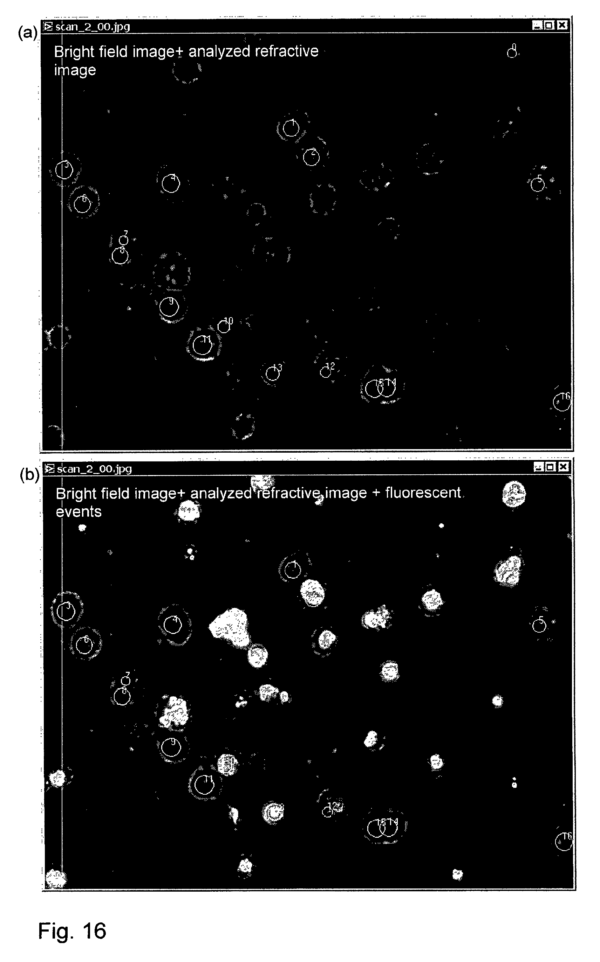

During the course of cell cultivations copious amounts of cell debris were generated and interfered with the cell counting. As an example for that, an original bright field image of a FullScan taken 120h after start of a cultivation gives an impression of the different objects in the cultivation broth and the difficulty to distinguish between them ( Fig. 15a). Because of the dense structure of some of the objects, a differentiation between viable and dead cells by the trypan blue exclusion method can be extremely difficult and thus this staining procedure is often not sufficient. Thus it can be very difficult to assign the individual objects to different classes by hand. Fig. 15b shows an overlay of the bright-field image of Fig. 15a with the refractive image corresponding to it. The additional information of the refractive image allows an identification of the refractively active objects and subsequently a determination of the number of viable cells using the "out of focus" algorithm. The result of the image analysis is shown in Fig. 16a. With only the bright field image plane and a manual trypan blue staining that is deteriorated by dense cell structures, an error-free determination of the number of viable cells would be almost impossible. The exceptional performance of the automatic determination can be appreciated from Fig. 16b. The bright field image, the analyzed refraction image and the fluorescence image are stacked on top of each other. The out of focus algorithm has detected 16 refractively active objects as viable cells. The size of diameter of the circles that marks the separated objects also serves as measurement of the strength of refraction of each individual object. It can be seen that most objects identified by the algorithm are viable cells not penetrated by DAPI. Only four objects that fluoresce were counted as viable cells. In these objects the refraction was still too strong, so these objects were counted twice, once as viable cells and once as dead or fluorescent cells. The objects #14 and #15 in Fig. 16c show the capability of the "out of focus" algorithm to also separate objects lying very close together. All objects that are refractively active focus the light on circular spots that appear smaller in size than the original objects and therefore can easily be separated by the algorithm.

*Quantified morphological changes*

It is well known that the morphology of suspension cells changes during a cultivation process. Together with the analysis of both the refractive image and centroid image, the analysis of the bright field image of a FullScan allows also a morphological description of the investigated samples. As mentioned earlier, the algorithm developed here calculates a large number of morphological parameters and saves all of these parameters in a database. For evaluation of these data, a software tool was developed which is based on a fast graphical visualization surface that allows a data visualization either as bar-graph plots, if only one single parameter needs to be shown, or as a scalable x,y-plot viewer that allows a flexible choice of different parameters of each axis.

It has been found that the particle perimeter and its area are two suitable parameters for describing the shape of an investigated object and to quantify its circularity. In a plot with the area of an object as the abscissa and the perimeter of the object as the ordinate, plotting the two parameters of a plurality of objects leads to a diagram in which all the circular objects lie exactly on a curve that is proportional to the square root of the area; non-circular objects lie either above or below said curve.

To more advantageously display the data points generated by the perimeter and area described before, the perimeter was replaced by the Heywood circularity factor. In contrast to the perimeter, the use of the Heywood circularity factor allows for a better separation of datapoint clusters and virtually the entire area of a diagram can be used. The Heywood circularity factor is defined as the ratio of an object perimeter to the perimeter of a circle with the same area, i.e.

$$\frac{particle\ perimeter}{perimeter\ of\ circle\ with\ same\ area\ as\ particle} = \frac{particle\ perimeter}{2\ \sqrt{\pi \cdot particle\ area}}$$

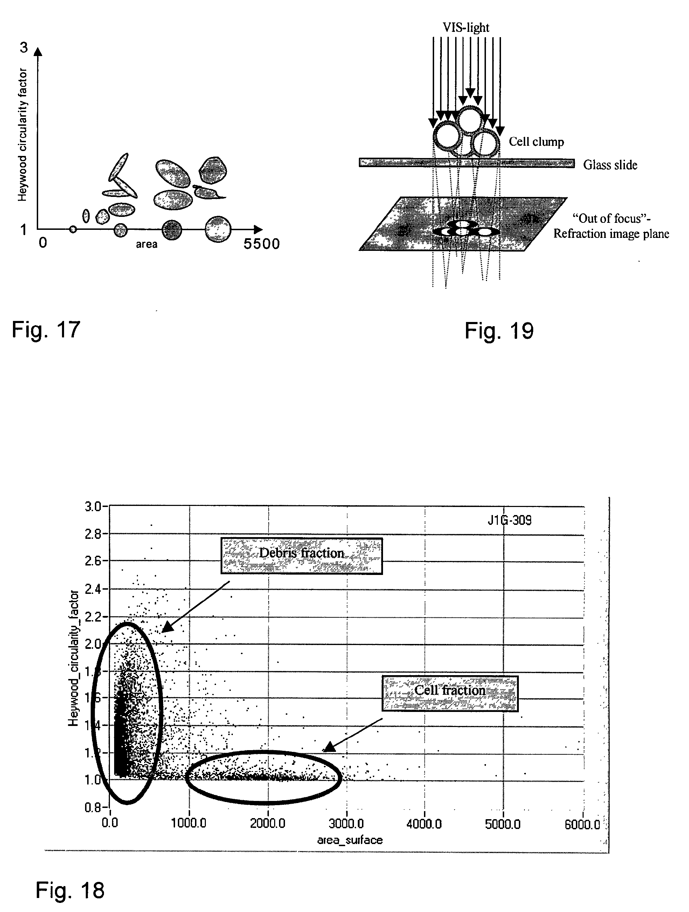

As an example, Fig. 17 shows some circular, ellipsoidal and irregularly shaped objects and their position in a Heywood-circularity diagram. Circular objects have a Heywood factor of one and lie on the horizontal axis in the diagram. Noncircular objects have a larger Heywood-circularity factor, and their position in the diagram depends on their area and shape. Fig. 18 shows an example of a typical Heywood-circularity diagram that contains two major particle clusters or fractions, a cell fraction and a debris fraction. Circular or slightly ellipsoidal cells generate data points near the horizontal x-axis with a Heywood circularity factor close to one. All the other objects generate data points further away from this cluster, particularly in the second cluster that contains all small, irregular shaped objects. The unit of the parameter areasurface in Fig. 18 is pixel. The geometry and resolution of the video-microscopy arrangement used here with a given magnification of 20 amounts to about 0.4pm/pixel, thus allowing calculation of the diameter of circular objects.

*Discussion of possible errors*

The two algorithms for analyzing the refractive images and centroid images are relatively error insensitive. The large contrast of these two types of images allow a straightforward threshold-calculation and a simple separation of objects and background. The extension of the circle function that was used in the refractive image algorithm and which is accompanied by a correction procedure ensures a proper separation even when cells are closely packed. As with previously known particle counting methods, the procedure is somewhat sensitive to cell clumps because the system is mainly designed for the observation of a substantially planar arrangement of cells. However, the system can cope with small clumps of 3 to 5 cells. The observation of the refractively active objects in the refractive image plane is a major advantage in regard of counting cells in clumps. The refraction of cells and the focusing of the refracted light in the refractive image plane to form brightly shining spots allows an easy separation of cells even in clumps. As long as the clumps are not too large, i.e. without complex multilayers, each cell in the clump generates a separate spot since the spot brightness is only weakly dependent of the horizontal and vertical position of a cell within a small clump (Fig. 19).

As to what concerns the algorithm for bright field image analysis, one occasionally encounters difficulties due to over-segmentation, insufficient separation and image border problems. Over-segmentation means that the algorithm is unable to isolate the entire structure of a cell from the background. As a result, the algorithm creates several truncated objects instead of one single cell, whereupon the truncated objects are erroneously interpreted as cell debris. The problem of over-segmentation can be overcome by modifying the filter parameters of the algorithm (parameter for isolating membrane structures or inner cell structures) in combination with an inrease or decrease of the illumination of the microscopic bright field images. A more effective way should be the implementation of a specific algorithm, for example the "watershed"-algorithm (P. Soille, "Morphologische Bildverarbeitung", Springer-Verlag Berlin, 1998). An over-segmentation can be prevented by using a marker based variant of this algorithm. The opposite problem that may occur with the bright fiels algorithm is insufficient segmentation, i.e. the algorithm may be unable to separate two cells and thus counts them as one cell. This problem should also be overcome with the use of the "watershed"-algorithm. The removal of particles that touch the border creates a third problem. The likelihood of touching the border increases with object size, number of cells per surface on the sample face and smallness of the section that is being imaged with one shot.

*Concluding remarks*

It has been shown that the course of mammalian production processes in regard of cell number and viability can be described more accurately by means of a FullScan and subsequent analysis of two or even three image planes than could be done by conventional means. The introduction of three scanned image planes - instead of only one image as in case of manual determination of cell number and viability using the trypan blue exclusion method - can accomplish a far higher degree of information and thus represents a real asset for obtaining multiparameter characterization of cells. The observation of cells in the refractive image mode provides information about the three-dimensional structure of the cells that cannot be obtained if a bright-field image near the sharpest focal plane is analyzed manually. The ability of cells to refract light is directly dependent on their cell volume, shape and size. Only when a cell is covered with an intact cell membrane having a smooth surface without any blebs or cracks can the cell hold sufficient active volume for refracting light. However, the existence of active cell volume is also a prerequisite for all metabolic activities of a cell and also for any product formation. Accordingly, it was found that the counts of refractively active objects correlate very well with the number of viable cells determined by the trypan-blue exclusion method. However, in contrast to the manual method, the automatic method is much more stable. In the stationary phase of batch or fed-batch cultivations it often comes to an over-estimation of viable cells by using the trypan blue exclusion method, because well formed viable cells and flat cell bodies that lost large amounts of their cytosol can look very similar. The bright field image plane conventionally used only contains information about cells on the basis of absorption, diffraction and scattering, but this is not sufficient to describe the 3D structure of a cell. The observer often cannot distinguish between a normally shaped cell and a densely packed cell ghost, because both objects absorb light in a similar way and generate very similar images. Without the refractive image, the observer would not obtain any further information about the three-dimensional structure of the object, although this information is necessary to establish whether a cell is viable or not. A staining with trypan-blue is often not sufficient, because of the weak contrast differences between stained and unstained cells. Apoptotic cells in particular are highly condensed and contain dense intracellular structures, which strongly absorb light. Establishing whether these cells additionally contain trypan-blue that penetrated the cell membrane is very difficult. In contrast, the use of DAPI as fluorescence marker allows a very simple detection of cells having been penetrated by the stain and simplifies the distinction between damaged and undamaged cells because the fluorescence signal does not interfere with dense cell structures.

The early detection of apoptosis by a single parameter such as the DNA distribution in the cell nuclei is not possible with present technlogy. However, the system described here can detect apoptotic cells by multiparameter analysis including the fluorescence distribution and morphology changes like shrinkage or blebbing.

Routine control of bioreactor cultivations, especially fed-batch processes in biopharmaceutical industry is an important application. Generally, these production processes are designed to maximize the product titer and must guarantee a constant product quality. Therefore, apoptosis turns out to be a major problem because of a depletion of nutrients or an excretion of toxic byproducts during progress of the cultivation. By recording FullScans, the system can control the run of a cultivation by observing several parameters and can recognize changes early. Necrotic cells are formed upon injury by strong mechanical or chemical stress, which has to be prevented from the beginning of a process. Because of the high sensitivity of fluorescent dyes used for determination of viability, cell damaging processes that lead to necrotic cells can de detected very quickly.

While the process and apparatus described hereinabove have been designed for the measurement of cell specific parameters, application to any other objects that have optical properties similar to those of mammalian cells appears possible.

### Claims

**1.** A process for characterization of a collection of cells by means of an imaging device, the imaging device (2) comprising a magnifying objective (4) with an optical axis (A) and a focal plane (P), the imaging device (2) further comprising an image processing device (6), a light source (8) and a transparent object plate (14) with a substantially even sample face (18) oriented substantially perpendicular to said optical axis (A), the light source (8) producing a substantially collimated light bundle (10) directed along said optical axis (A) and towards the objective (4), the object plate (14) being arranged between the light source (8) and the objective (4), said process **characterized by** the steps of:

a) applying a pre-treatment to a collection of cells (20), said pre-treatment including at least the step of arranging said collection of cells (20) on the sample face (18) so as to form a substantially planar arrangement (22) of cells that are all adjacent to the sample face (18);

b) obtaining a group of images of said cell arrangement (22), the group comprising at least one set of images of a selected section of said cell arrangement; and

c) applying to each set of images an image processing procedure to obtain said characterization;

said set of images comprising a refractive image and at least one further image of said selected section, said further image being either a bright field image or a centroid image, said set of images being obtained by performing, in arbitrary sequence, the procedures of:

d) adjusting the objective (4) so that the focal plane (P) substantially coincides with a refractive image plane (R) containing a plurality of light spots (S) resulting from focussing of said light bundle (10) by the cells (20) of said selected section, and thereafter recording said refractive image;

and at least one procedure selected from the group of:

e) adjusting the objective (4) so that the focal plane (P) substantially coincides with a bright field image plane (B) which is substantially parallel to said sample face (18) and displaced therefrom towards the objective (4) by a distance selected to optimize bright field contrast of the cells (20) of said selected section, and thereafter recording said bright field image; and

f) adjusting the objective (4) so that the focal plane (P) substantially coincides with a centroid image plane (C) which is substantially parallel to said sample face (18) and displaced therefrom towards the objective (4) by substantially one half of an average diameter of said collection of cells (20), and thereafter recording said centroid image.

2. The process according to claim 1, **characterized in that** said step of arranging said collection is performed by allowing for sedimentation of said cells.

3. The process according to claim 1 or 2, **characterized in that** said pre-treatment further includes applying a labelling procedure to said collection of cells so as to obtain a collection of labelled cells, said labelling being chosen so as to enhance contrast in at least one image of said set of images.

4. The process according to claim 3, **characterized in that** said labelling procedure includes adding a fluorescent dye.

5. The process according to any one of claims 1 to 4, **characterized in that** said image processing procedure includes comparing spatially coincident image elements of said set of images.

6. The process according to any one of claims 1 to 5, **characterized in that** said image processing procedure further includes applying a discrimination algorithm to the refractive image so as to obtain a plurality of discriminated light spots resulting from focussing of said light bundle by a subset of refractively active cells of said selected section.

7. The process according to claim 6, **characterized in that** said image processing procedure further includes determining for each discriminated light spot at least one property selected from the group consisting of size, shape and intensity.

8. The process according to any one of claims 1 to 7, **characterized in that** said image processing procedure further includes applying a discrimination algorithm to the labelled image so as to obtain a plurality of discriminated labelled spots resulting from a subset of labelled cells of said selected section.

9. The process according to any one of claims 1 to 8, **characterized in that** said image processing procedure further includes applying a morphologic analysis algorithm to the bright field image so as to obtain a plurality of morphological parameters of the cells of said selected section.

10. The process according to any one of claims 1 to 9, **characterized in that** said group of images comprises a plurality of image sets, each image set being obtained for a different section of said cell arrangement.

11. The process according to any one of claims 1 to 9, **characterized in that** said group of images comprises a plurality of image sets, each image set being obtained at a different time for substantially the same section of said cell arrangement.

12. An apparatus for carrying out the process of claim 1, comprising an imaging device (2) with a magnifying objective (4) featuring an optical axis (A) and a focal plane (P), the imaging device (2) further comprising an image processing device (6), a light source (8) and a transparent object plate (14) with a substantially even sample face (18) oriented substantially perpendicular to said optical axis (A), the light source (8) producing a substantially collimated light bundle (10) directed along said optical axis (A) and towards the objective (4), the object plate (14) being arranged between the light source (8) and the objective (4), the apparatus being **characterized in that** it comprises:

a) arrangement means (12) for arranging said collection of cells (20) on the sample face (18) so as to form a substantially planar arrangement (22) of cells that are all adjacent to the sample face (18);

b) image acquisition means for obtaining said group of images of said cell arrangement, comprising adjustment means for adjusting the objective so that the focal plane (P) substantially coincides with said refractive image plane (R) or said bright field image plane (B) or said centroid image plane (C);

c) image processing means for applying to said set of images an image processing procedure to obtain said characterization.

13. The apparatus according to claim 12, **characterized in that** said optical axis (A) is oriented in a substantially vertical direction (z), said arrangement means comprising a sample chamber (12) provided with a sample inlet and a sample outlet, the sample chamber further comprising a bottom window (14) and a top window (16), the bottom window comprising a transparent object plate with a substantially even upper face (18) oriented in a substantially horizontal direction, said upper face forming said sample face.

14. The apparatus according to claim 13, **characterized in that** it further comprises a sample handling system connected to said sample inlet.

15. The apparatus according to any one of claims 12 to 14, **characterized in that** it further comprises a device for labelling said collection of cells.

Fig. 1

Fig. 2

Screw

Chamber top

O-ring gasket

Base-plate (9x13cm)

Glass-slide

## Fig. 3

FullScans

z-axis

1.Pass

3.Pass

2.Pass

Refraction Image

Fluorescence Image

Bright field Image

Image Analysis

## Fig. 4

SnapScan

z-axis

1.Pass

3.Pass

2.Pass

Video-Sequence

## Fig. 5

Microscope and Staining System

Control Computer

**OLM V.167**
•control of the microscope
•control of the liquid handling
•staining
•cell counting
•fluorescent spots detection
•autofocus

Image Processing Computer

**Morphological Analysis**
•morphological analysis of the "nearly in focus" FullScan images

FullScans data

Morphological data

Reactor Parameter

Cultivation data

Off-Line Analytics

Graphical Visualization

Fig. 6

| FullScan: Refraction Image |
|---|

**Out of focus algorithm**

| Exponential lookup table |
|---|

| inverse |
|---|

| Convolute (smoothing, 5,0) |
|---|

| Erode (5,1,smoothing) |
|---|

| inverse |
|---|

| Threshold (sigma, histogram) |
|---|

| Circle (min,max radius) |
|---|

| Circle func. correction |
|---|

| Refractive active objects |
|---|

## Fig. 7

Fig. 8

Fig. 10

```
                    ┌─────────────────────┐
                    │     FullScan:        │
                    │  bright field image  │
                    └─────────────────────┘
```

**Isolating Membrane Structures**

Nth-Order (x-size, y-size, Order #)

Canny Filter(sigma, Htresh, Ltresh, window size)

**Isolating inner cell structures**

Low Pass (x-size, y-size, tolerance &)

Threshold (sigma, histogram)

Equalize

Inverse

**Addition**

**After Add Processing**

FillHole

UserLookup(binary 1=> 255)

Opening (structuring element)

Remove Particle (# of Erosion)

Separation (# of Erosion, structuring element))

Particle Filter (area, upper value)

RejectBorder

Label Objects

ComplexParticle

**Calculated Morphological Parameter**

Fig. 9

Fig. 11

refractive image

bright field image

centroid image

Fig. 12

Blebbing

Irregular membrane surface

Spherical, regular membrane structure

Glass slide

Objective Focal Plane

Fig. 13

Fig. 14

(a)

(b)

Fig. 15

Fig. 16

Fig. 17

Fig. 19

Fig. 18

**EP 1 316 793 A1**

<table>
<tr><td colspan="2">**European Patent Office**</td><td>**EUROPEAN SEARCH REPORT**</td><td>**Application Number**<br>EP 01 12 8395</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 31150 A (ARAV AMIR ;INTERFACE MULTIGRAD TECHNOLOGY (IL)) 16 July 1998 (1998-07-16) | 1,2,5,9, 11,12 | G01N21/47 C12M1/34 |
| Y | * page 5, line 8 - page 6, line 18; claims; figures * | 3,4,15 | |
| Y | US 5 601 997 A (TCHAO RUY) 11 February 1997 (1997-02-11) * claims * | 3,4,15 | |

| | | | TECHNICAL FIELDS SEARCHED (Int.Cl.7) |
|---|---|---|---|
| | | | C12M G01N |

The present search report has been drawn up for all claims

| Place of search | Date of completion of the search | Examiner |
|---|---|---|
| THE HAGUE | 21 August 2002 | Coucke, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 12 8395

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2002

| Patent document cited in search report | | Publication date | Patent family member(s) | | Publication date |
|---|---|---|---|---|---|
| WO 9831150 | A | 16-07-1998 | US | 6166761 A | 26-12-2000 |
| | | | AU | 5493998 A | 03-08-1998 |
| | | | EP | 0951778 A1 | 27-10-1999 |
| | | | WO | 9831150 A1 | 16-07-1998 |
| US 5601997 | A | 11-02-1997 | GB | 2297615 A ,B | 07-08-1996 |

EPO FORM P0459

For more details about this annex : see Official Journal of the European Patent Office, No. 12/82